# EUROPEAN PATENT SPECIFICATION

(11) **EP 0 613 123 B1**
(45) Date of publication and mention of the grant of the patent: **02.02.2000**
(21) Application number: 94200392.2
(22) Date of filing: 15.02.1994
(51) Int. Cl.: G11B 7/085

(54) **Device for recording and/or reading information by means of a radiation beam, plate-shaped element suitable for use in the device, and disc player comprising the device**
Vorrichtung zum Aufzeichnen und/oder Lesen von Information mit Strahlungsbundel, plattenförmige Elemente zur Verwendung in der Vorrichtung, und Plattenspieler mit der Vorrichtung
Dispositif d'enregistrement et/ou de lecture d'informations par faisceau de radiation, élément en forme de plaque apte à être utilisé dans le dispositif, et lecteur de disques comprenant le dispositif

(30) Priority: 22.02.1993 EP 93200495
(43) Date of publication of application: 31.08.1994
(73) Proprietor: Koninklijke Philips Electronics N.V., 5621 BA Eindhoven (NL)
(72) Inventor: van Rosmalen, Gerard Eduard, NL-5656 AA Eindhoven (NL)
(74) Representative: Schrijnemaekers, Hubert Joannes Maria

(56) References cited:
- EP-A- 0 602 720
- US-A- 4 922 477
- PATENT ABSTRACTS OF JAPAN vol. 12, no. 441 (P-789) 21 November 1988 & JP-A-63 168 844 (NEC HOME ELECTRONICS) 12 July 1988
- PATENT ABSTRACTS OF JAPAN vol. 17, no. 585 (P-1632) 25 October 1993 & JP-A-05 166 308 (KYOCERA CORP) 2 July 1993

## Description

The invention relates to a device for inscribing and/or reading information by means of a radiation beam, which device comprises a frame, a turntable for supporting a disc-shaped information carrier, which turntable is supported by the frame, and a drive unit for rotating the turntable about an axis of rotation, a slide which is movable in an at least substantially radial direction relative to the axis of rotation of the turntable and a drive arrangement for the slide, said slide having a slide body, a scanning device comprising a stationary section and a movable section which is movable relative to the stationary section in a focusing direction, the stationary section being carried by the slide body of the slide, and the movable section carrying an objective lens for focusing the radiation beam onto a surface of the information carrier.

The invention also relates to a disc player comprising a housing and a device according to the invention.

A device as mentioned in the opening paragraph is known from EP-A-0 473 425 (herewith incorporated by reference). EP-A-0 473 425 discloses an optical player with a slide which is movable along guide spindles of a magnetically permeable material and which carries an objective lens and an actuator for moving the objective lens in a focusing direction. The guide spindles are secured to a frame, which also carries a turntable for supporting an optical disc. The slide, which is movable in a radial direction relative to the turntable, is coupled to a drive arrangement comprising a magnetic yoke, which includes the guide spindles, with a permanent magnet and two cylindrical drive coils, which are secured to the slide and which surround the guide spindles. The slide comprises two supporting units carrying rollers for cooperation with the guide spindles, and a pick-up body secured to the supporting units and carrying the drive coils and the actuator. The known slide is of comparatively intricate construction, is comparatively heavy and is comparatively bulky, particularly its dimension in the focusing direction being large. Moreover, the known slide has the problem, as is known *per se*, that energization of the cylindrical drive coils gives rise to a comparatively large self-induction, which counteracts rapid variations in current strength in the drive coils.

For design purposes modern optical players generally have to comply with stringent requirements as regards a small overall height and a short access time. The known device cannot meet these requirements.

It is an object of the invention to improve the device of the type defined in the opening paragraph so as to obtain a slim light-weight device by means of which short access times are attainable.

To this end the device in accordance with the invention is characterized in that the slide body of the slide is formed from two plate-shaped parts which are parallel to each other and are secured to each other in mutually fixed positions, each of the plate-shaped parts having a pattern of raised portions on a side facing the other plate-shaped part, raised portions of one of the plate-shaped parts being affixed to raised portions of the other plate-shaped part at a plurality of locations. Owing to this construction the slide used in the device in accordance with the invention is not only flat and light in weight but it also has a high torsional as well as flexural stiffness. As is also the case in the known device, the slide forms part of a radial tracking system for following an information track in the information carrier during recording and/or reading. Moreover, as is in the knwon device, the device in accordance with the invention comprises a focus control system for focusing the radiation beam to a radiation spot on an information surface of the information carrier. It has been found that in spite of the plate-shaped slide body the slide of the device in accordance with the invention has natural frequencies whose values lie substantially outside the control ranges of the tracking system and the focus control system, so that annoying resonances during scanning of the optical information carrier are minimized.

It is noted that JP-A-63 168 844 discloses a scanning device for use in an optical disc player, in which a lens holder is secured to a plate-shaped mounting element via two parallel plate-shaped members and four elastic hinges. The mounting element is rotatable about an axis of rotation which is parallel to an optical axis of the lens holder, so that the lens holder is displaceable in a radial direction perpendicular to the optical axis. The lens holder is also displaceable parallel to the optical axis under deformation of a parallellogram mechanism formed by the two parallel plate-shaped members, the plate-shaped mounting element, and the lens holder. The two parallel plate-shaped members are each provided with a pattern of raised portions on a side remote from the other plate-shaped member.

An embodiment of the device in accordance with the invention is characterized in that said raised portions of each of the plate-shaped parts take the form of ribs. It has been found that high torsional and flexural stiffnesses are attainable by providing both plate-shaped parts with a rib structure. Improved stiffnesses with the same low mass of the slide body are obtained if the ribs intersect each other.

An embodiment of the device in accordance with the invention is characterized in that said raised portions of each of the plate-shaped parts form a honeycomb structure. Such a structure results in optimum torsional and flexural stiffnesses.

An embodiment of the device in accordance with the invention is characterized in that the pattern of raised portions on one side is the mirror image of the pattern of raised portions on the other side. In this way the structures of the two plate-shaped parts are exactly in register, so that an optimum use is made of the properties of the structures.

An embodiment of the device in accordance with the invention is characterized in that the two plate-shaped parts have an equal thickness. In the present embodiment forces exerted on the slide body are divided equally between the two parts.

An embodiment of the device in accordance with the invention is characterized in that a damping material is situated between raised portions of the one part and raised portions of the other part. An advantage of this embodiment is that resonances of the slide body which are generated in operation are damped, so that resonances which could affect the tracking system and/or the focus control system are suppressed at the earliest possible stage.

An embodiment of the device in accordance with the invention is characterized in that the damping material is an adhesive. In this way it is possible to secure the parts to one another during manufacture and to achieve damping during use by means of the same material, for example a damping polyacrylate resin.

An embodiment of the device in accordance with the invention is characterized in that the damping material is rubber. It has been found that shear forces occurring in the damping material during damping can be absorbed very effectively by a synthetic rubber, such as butyl rubber or silicone rubber.

An embodiment of the device in accordance with the invention is characterized in that the drive arrangement for the slide comprises a flat drive coil secured to the slide body and having a coil axis oriented transversely of the plate-shaped slide body, the slide body and the drive coil being coplanar, and at least one flat permanent magnet for cooperation with the drive coil, which magnet is arranged opposite the drive coil and is secured to a yoke of a soft-magnetic material, which yoke is at least partly plate-shaped and is oriented transversely of the coil axis. The drive arrangement used has a small coefficient of self-induction, permitting a rapid increase of an electric current through the drive coil. Moreover, the flat drive coil, which cooperates with the magnet *via* an air gap, has a satisfactory dissipation of heat to the surrounding air, so that the slide can perform a large number of movements per unit of time. Consequently, the present drive arrangement enables short access times to be attained. A further advantage of the drive arrangement is that its overall height can be small.

An embodiment of the device in accordance with the invention is characterized in that the plate-shaped yoke is secured to the frame by resilient and damping means capable of elastic deflection and of damping in an at least substantially radial direction relative to the axis of rotation of the turntable. This step prevents large reactive forces, which are produced during high accelerations of the slide, from being transmitted to the flame, in order to preclude unnecessary loading of the control systems used.

An embodiment of the device in accordance with the invention is characterized in that said means comprise at least one resilient element and at least one damping element.

The invention will now he described in more detail, by way of example, with reference to the drawings, in which
Figure 1 is a perspective view of an embodiment of the disc player in accordance with the invention,
Figure 2 is a perspective view of an embodiment of the device in accordance with the invention,
Figure 3 shows a slide of the device shown in Figure 2,
Figure 4 shows a part of a slide body of the slide shown in Figure 3,
Figure 5 shows a part of an embodiment of a composite plate-shaped element in accordance with the invention, and
Figure 6 shows a part in sectional view taken on the line VI-VI in Figure 5.

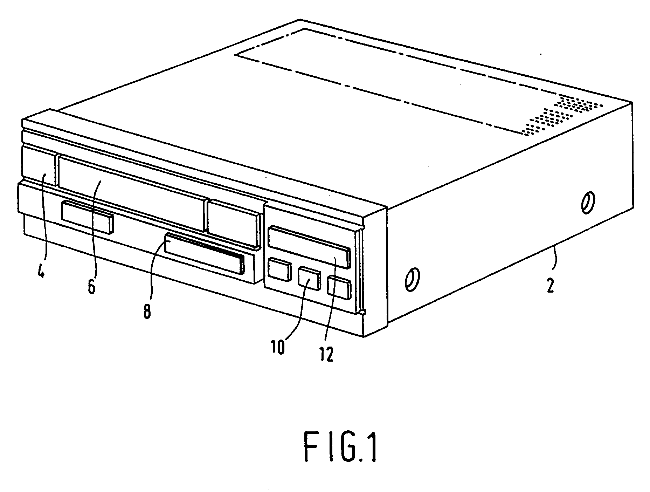

The optical player in accordance with the invention shown in Figure 1 comprises a housing 2 with a front 4 having a front opening in which is drawer 6 is situated. The drawer 6 forms part of a loading device which is not described in more detail herein. A suitable loading device is disclosed in, for example, EP-A 0,397,262 (herewith incorporated by reference). The front 4 further carries control keys 8, program keys 10, and a display 12. The housing 2 accommodates a device in accordance with the invention and a laser source. Depending on the provisions with which it is equipped the player shown can be used for optically reading an optical disc, for example a CD or CD-ROM, or for magneto-optically inscribing and/or optically reading a magneto-optical disc, such as a 3½" MO disc.

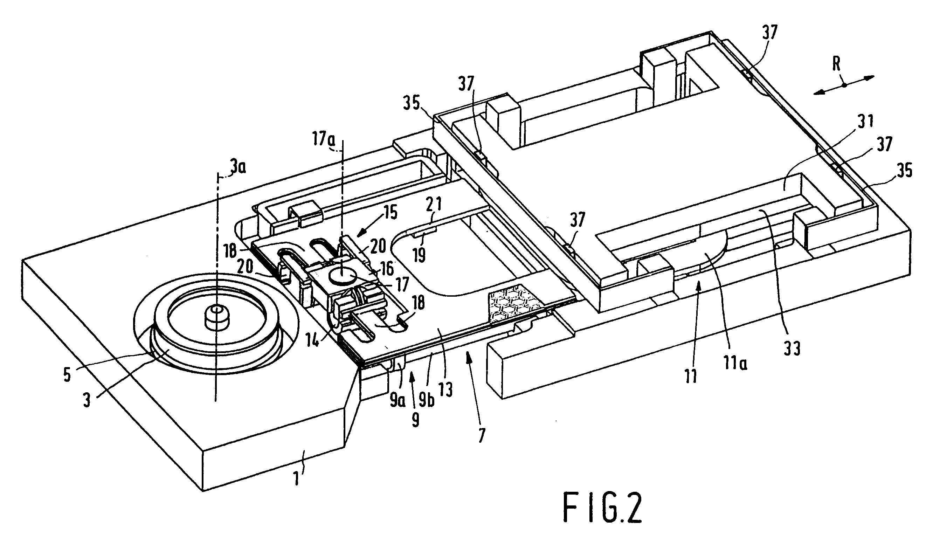

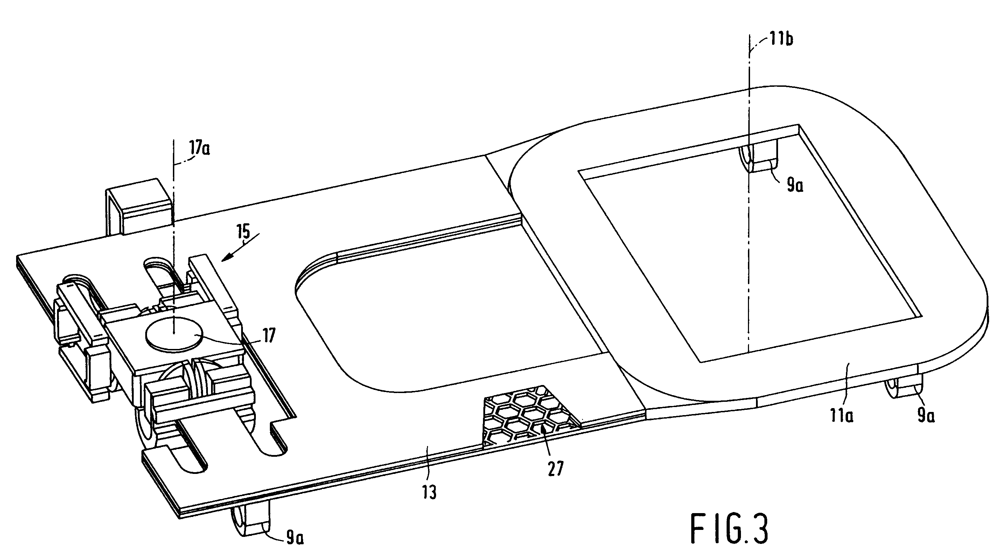

The device in accordance with the invention shown in Figures 2 to 4 comprises a slide 7 with a slide body 13 and a frame 1 for supporting the slide 7. The frame 1 carries a turntable 3 which is rotatable about an axis of rotation 3a. In operation the turntable 3, which is adapted to support disc-shaped information carriers, particularly optical or magneto-optical discs, in a centred fashion, is driven by an electrical drive unit 5. The slide 7 is movable in a radial direction R relative to the turntable 3. For this purpose the device has rectilinear guide means 9 comprising four bearings 9a, for example sleeve bearings, and two parallel guide spindles 9b secured to the frame 1 and engaging the bearings.

The device in accordance with the invention further comprises a drive arrangement 11 for the slide 7. This drive arrangement, whose principle is known from DE 33 15 848 (herewith incorporated by reference), comprises a flat drive coil 11a secured to the slide 7 and a flat permanent magnet 33 facing the drive coil 11a. The magnet 33, which cooperates with the drive coil 11a *via* an air gap when the drive coil 11a is energized, comprises a pair of magnet poles of mutually opposite polarity which face the drive coil, and is secured to a plate-shaped part of a yoke 31. The yoke 31 is made of a soft-magnetic material and is secured to the frame 1 *via* elements 35 which can deflect elastically in the radial direction R and in the present example comprise two resilient members secured to the frame 1. Damping elements 37, which in the present example comprise rubber pads, are interposed between the members and the yoke.

The slide 7 carries a scanning device 15 comprising an objective lens 17 for focusing a radiation beam onto the surface of an information carrier lying on the turntable and rotated together with the turntable. The objective lens 17 has an optical axis 17a which extends parallel to the axis of rotation 3a. The scanning device 15 comprises a stationary section 14 and a section 16 which is movable relative to said stationary section and which carries the objective lens 17. The stationary section 14 is secured to parts 18 of the slide body 13 and the movable section 16 is secured to the slide 7 *via* resilient suspension frames 20. The suspension frames allow limited movements of the movable section 16 in focusing directions, *i.e.* movements along the optical axis 17a, and in the radial direction R. The scanning device comprises electromagnetic drive means for driving the movable section 16. The scanning device used in the present example is described in the European Patent Application filed under number 92203983.9 (PHN 14.330 EP-P; herewith incorporated by reference).

The slide body 13 of the slide 7 of the device in accordance with the invention is an element formed by two plate-shaped parts 19 and 21 secured to one another. In the example shown in Figures 2 to 4 the parts 19 and 21 are injection-moulded products moulded from a liquid-crystal polymer. At the sides 19a and 21a which face each other the plate-shaped parts 19 and 21 have identical honeycomb structures 27, the raised portions or ribs 23 of the one structure being exactly in register with the raised portions or ribs 25 of the other structure. An adhesive layer and a thin layer of a damping material, for example butyl rubber, are situated between the ribs 23 and 25.

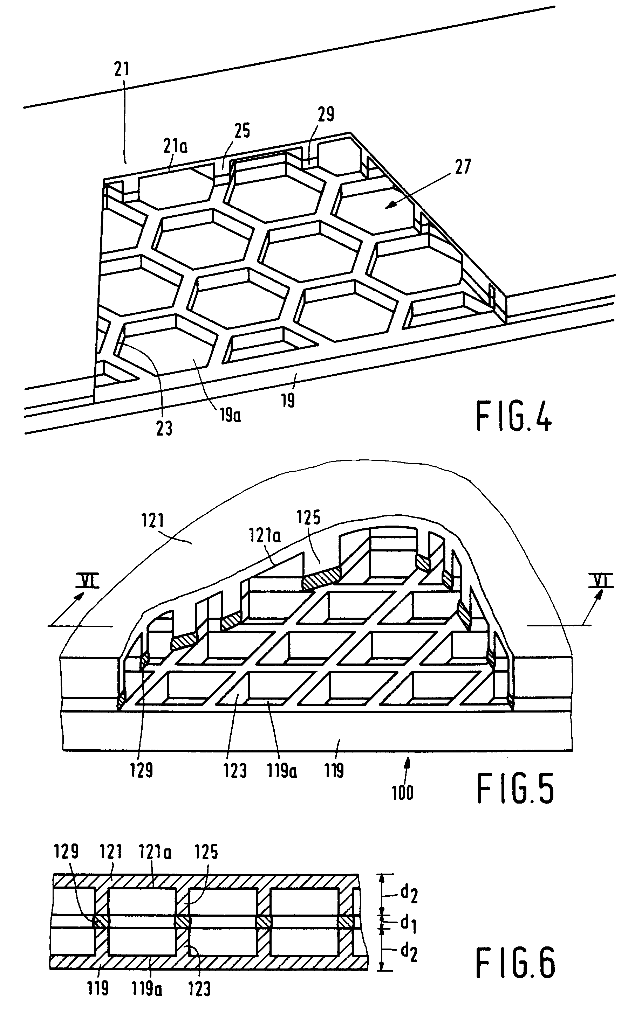

The element 100 in accordance with the invention shown in Figures 5 and 6 is made up of two parallel plate-shaped parts 119 and 121. Each of the parts 119 and 121 has a side 119a and 121a, respectively, which faces the other part and which has been provided with a pattern of raised portions, particularly ribs 123 and 125, respectively. The intersecting ribs 123 of the one part 119 are secured to the intersecting ribs 125 of the other part 121. The pattern of ribs 123 on the one side 119a is affixed to mirror-inverted pattern of ribs 125 on the other side. This is effected, for example, by applying a thin layer 129 of polyacrylate resin having a thickness d1 of preferably less than 0.3 mm. The parts 119 and 121, which in the present example, are made of aluminium, have an equal thickness d2 of, in the present example, 1.0 mm.

## Claims

1. A device for inscribing and/or reading information by means of a radiation beam, which device comprises
- a frame (1),
- a turntable (3) for supporting a disc-shaped information carrier, which turntable is supported by the frame, and a drive unit (5) for rotating the turntable about an axis of rotation (3a),
- a slide (7) which is movable in an at least substantially radial direction (R) relative to the axis of rotation of the turntable and a drive arrangement (11) for the slide, said slide having a slide body (13),
- a scanning device (15) comprising a stationary section (14) and a movable section (16) which is movable relative to the stationary section in a focusing direction (17a), the stationary section being carried by the slide body of the slide, and the movable section carrying an objective lens (17) for focusing the radiation beam onto a surface of the information carrier,
characterized in that the slide body (13) of the slide (7) is formed from two plate-shaped parts (19, 21; 119, 121) which are parallel to each other and are secured to each other in mutually fixed positions, each of the plate-shaped parts having a pattern of raised portions (23, 25; 123, 125) on a side (19a, 21a; 119a, 121a) facing the other plate-shaped part, raised portions of one of the plate-shaped parts being affixed to raised portions of the other plate-shaped part at a plurality of locations.

2. A device as claimed in Claim 1, characterized in that said raised portions are ribs (23,25; 123,125).

3. A device as claimed in Claim 2, characterized in that the ribs (23,25; 123,125) of each of the plate-shaped parts (19,21; 119,121) intersect each other.

4. A device as claimed in Claim 1, 2 or 3, characterized in that said raised portions (23,25; 123,125) of each of the plate-shaped parts (19,21; 119,121) form a honeycomb structure (27).

5. A device as claimed in Claim 1, 2, 3 or 4, characterized in that the pattern of raised portions on one side (19a; 119a) is the mirror image of the pattern of raised portions on the other side (21a; 121a).

6. A device as claimed in Claim 1, 2, 3, 4 or 5, characterized in that the two plate-shaped parts have an equal thickness (d2).

7. A device as claimed in any one of the preceding Claims, characterized in that the plate-shaped parts (19,21; 119,121) are injection-moulded products.

8. A device as claimed in any one of the preceding Claims, characterized in that the parts (19,21; 119,121) are formed from a plastics.

9. A device as claimed in any one of the Claims 1 to 7, characterized in that the parts (19,21; 119,121) are formed from one of the metals aluminium or magnesium.

10. A device as claimed in any one of the preceding Claims, characterized in that a damping material is situated between raised portions of the one part (23; 123) and raised portions of the other part (25; 125).

11. A device as claimed in Claim 10, characterized in that the damping material is an adhesive.

12. A device as claimed in Claim 10, characterized in that the damping material is rubber.

13. A device as claimed in any one of the preceding Claims, characterized in that the drive arrangement (11) for the slide (7) comprises
- a flat drive coil (11a) secured to the plate-shaped slide body (13) and having a coil axis oriented transversely of the slide body, the slide body and the drive coil being coplanar, and
- at least one flat permanent magnet (33) for cooperation with the drive coil, which magnet is arranged opposite the drive coil and is secured to a yoke (31) of a soft-magnetic material, which yoke is at least partly plate-shaped and is oriented transversely of the coil axis.

14. A device as claimed in Claim 13, characterized in that the plate-shaped yoke (31) is secured to the frame (1) by resilient and damping means (37) capable of elastic deflection and of damping in an at least substantially radial direction relative to the axis of rotation (3a) of the turntable (3).

15. A device as claimed in Claim 14, characterized in that said damping means comprise at least one resilient element and at least one damping element.

16. A disc player comprising a housing (2) and a device as claimed in any one of the Claims 1 to 15.

## Patentansprüche

1. Einrichtung zum Einschreiben und/oder Auslesen von Information mit Hilfe eines Strahlungsbündels, wobei diese Einrichtung die nachfolgenden Elemente umfasst:
- einen Rahmen (1),
- einen Plattenteller (3) zum Tragen eines plattenförmigen Informationsträgers, wobei dieser Plattenteller von dem Rahmen unterstützt wird, und eine Antriebseinheit (5) um den Plattenteller um eine Drehungsachse (3a) in Drehung zu versetzen,
- einen Schieber (7), der in einer wenigstens im Wesentlichen radialen Richtung (R) gegenüber der Drehungsachse des Plattentellers verlagerbar ist, und eine Antriebsvorrichtung (11) für den Schieber, wobei der Schieber einen Schieberkörper (13) aufweist,
- eine Abtastanordnung (15) mit einem ortsfesten Teil (14) und einem ortsbeweglichen Teil (16), der gegenüber dem ortsfesten Teil in einer Fokussierungsrichtung (17a) verlagerbar ist, wobei der ortsfeste Teil von den Schieberkörper des Schiebers getragen wird und wobei der verlagerbare Teil ein Objektiv (17) trägt zum Fokussieren des Strahlungsbündels auf eine Fläche des Informationsträgers,
dadurch gekennzeichnet, dass der Körper (13) des Schiebers (7) aus zwei plattenförmigen Teilen (19, 21; 119, 121) gebildet ist, die sich parallel zueinander erstrecken und an zueinander festen Stellen aneinander befestigt sind, wobei jeder der plattenförmigen Teile ein Muster erhabener Teile (23, 25; 123, 125) an einer Seite (19a, 21a; 119a, 121a) aufweist, die dem anderen plattenförmigen Teil zugewandt ist, wobei die erhabenen Teile eines der plattenförmigen Teile an einigen Stellen an erhabenen Teilen des anderen plattenförmigen Teils befestigt sind.

2. Einrichtung nach Anspruch 1m dadurch gekennzeichnet, dass die genannten erhabenen Teile Rippen (23, 25; 123, 125) sind.

3. Einrichtung nach Anspruch 2, dadurch gekennzeichnet, dass die Rippen (23, 25; 123, 125) jedes der plattenförmigen Teile (19, 21; 119, 121) einander kreuzen.

4. Einrichtung nach Anspruch 1, 2 oder 3, dadurch gekennzeichnet, dass die genannten erhabenen Teile (23, 25; 123, 125) jedes der plattenförmigen teile (19, 21; 119, 121) eine Honigwabenstruktur (27) bilden.

5. Einrichtung nach Anspruch 1, 2, 3 oder 4, dadurch gekennzeichnet, dass das Muster der erhabenen Teile auf der einen Seite (19a, 119a) das Spiegelbild des Musters erhabener Teile auf der anderen Seite (21a, 121a) ist.

6. Einrichtung nach Anspruch 1, 2, 3, 4 oder 5, dadurch gekennzeichnet, dass die beiden plattenförmigen Teile die gleiche Dicke (d2) haben.

7. Einrichtung nach einem der vorstehenden Ansprüche, dadurch gekennzeichnet, dass die plattenförmigen Teile (19, 21; 119, 121) im Spritzgussverfahren gebildete Teile sind.

8. Einrichtung nach einem der vorstehenden Ansprüche, dadurch gekennzeichnet, dass die Teile (19, 21; 119, 121) aus einem Kunststoff gebildet sind.

9. Einrichtung nach einem der Ansprüche 1 bis 7, dadurch gekennzeichnet, dass die teile (19, 21; 119, 121) aus einem der Metalle Aluminium oder Magnesium gebildet sind.

10. Einrichtung nach einem der vorstehenden Ansprüche, dadurch gekennzeichnet, dass das Dämpfungsmaterial zwischen erhabenen Teilen des einen Teils (23; 123) und erhabenen Teilen des anderen Teils (25; 125) vorgesehen ist.

11. Einrichtung nach Anspruch 10, dadurch gekennzeichnet, dass das Dämpfungsmaterial ein Klebstoff ist.

12. Einrichtung nach Anspruch 10, dadurch gekennzeichnet, dass das Dämpfungsmaterial Gummi ist.

13. Einrichtung nach einem der vorstehenden Ansprüche, dadurch gekennzeichnet, dass die Antriebsvorrichtung (11) für den Schieber (7) die nachfolgenden Elemente umfasst:
- eine flache Antriebsspule (11a), die an dem Schieberkörper (13) befestigt ist und eine Spulenachse hat, die sich quer zu dem plattenförmigen Schieberkörper erstreckt, wobei der Schieberkörper und die Antriebsspule in gleicher Ebene liegen, und
- wenigstens einen flachen Dauermagneten (33) zum Zusammenarbeiten mit der Antriebsspule, wobei dieser Magnet gegenüber der Antriebsspule vorgesehen und an einem Joch (31) aus weichmagnetischem Material befestigt ist, wobei dieses Joch wenigstens teilweise plattenförmig ist und sich quer zu der Spulenachse erstreckt.

14. Einrichtung nach Anspruch 13, dadurch gekennzeichnet, dass das plattenförmige Joch (31) an dem Rahmen (1) befestigt ist durch federnde und dämpfende Mittel (37), die eine elastische Auslenkung und eine Dämpfung in wenigstens im Wesentlichen radialer Richtung gegenüber der Drehungsachse (3a) des Plattentellers (3) schaffen.

15. Einrichtung nach Anspruch 14, dadurch gekennzeichnet, dass die genannten Dämpfungsmittel wenigstens ein Federelement und wenigstens ein Dämpfungselement aufweisen.

16. Plattenspieler mit einem Gehäuse (2) und einer Einrichtung nach einem der Ansprüche 1 bis 15.

## Revendications

1. Dispositif d'enregistrement et/ou de lecture d'informations par faisceau de rayonnement, ce dispositif comprenant un cadre (1), un plateau tournant (3) pour supporter un support d'informations en forme de disque, ce plateau tournant étant supporté par le cadre, et une unité d'entraînement (5) pour faire tourner le plateau tournant autour d'un axe de rotation (3a), un coulisseau (7), qui est mobile dans une direction (R) au moins sensiblement radiale par rapport à l'axe de rotation du plateau tournant et un système d'entraînement (11) pour le coulisseau, ledit coulisseau ayant un corps de coulisseau (13), un dispositif de balayage (15) comprenant une partie fixe (14) et une partie mobile (16), qui peut se déplacer par rapport à la partie fixe dans une direction de focalisation (17a), la partie fixe étant portée par le corps de coulisseau et la partie mobile portant un objectif (17) destiné à focaliser le faisceau de rayonnement sur la surface du support d'informations, caractérisé en ce que le corps (13) du coulisseau (7) est formé de deux pièces en forme de plaque (19, 21; 119, 121) qui sont parallèles l'une à l'autre et sont fixées l'une à l'autre dans des positions réciproquement fixes, chacune des pièces en forme de plaque présentant un ensemble de parties surélevées (23, 25; 123, 125) sur une face (19a, 21a; 119a, 121a) tournée vers l'autre pièce en forme de plaque, les parties surélevées d'une des pièces en forme de plaque étant fixées à des pièces surélevées de l'autre pièce en forme de plaque en une pluralité d'endroits.

2. Dispositif suivant la revendication 1, caractérisé en ce que lesdites parties surélevées sont des nervures (23, 25; 123, 125).

3. Dispositif suivant la revendication 2, caractérisé en ce que les nervures (23, 25; 123, 125) de chacune des pièces en forme de plaque (19, 21; 119, 121) s'entrecroisent.

4. Dispositif suivant la revendication 1, 2 ou 3, caractérisé en ce que lesdites parties surélevées (23, 25; 123, 125) de chacune des pièces en forme de plaque (19, 21; 119, 121) forment une structure en nids d'abeilles (27).

5. Dispositif suivant la revendication 1, 2, 3 ou 4, caractérisé en ce que l'ensemble de parties surélevées sur un côté (19a; 119a) et l'ensemble de parties surélevées sur l'autre côté (21a; 121a) sont énantiomorphes.

6. Dispositif suivant la revendication 1, 2, 3, 4 ou 5, caractérisé en ce que les deux pièces en forme de plaque ont la même épaisseur (d2).

7. Dispositif suivant l'une quelconque des revendications précédentes, caractérisé en ce que les pièces en forme de plaque (19, 21; 119, 121) sont des produits moulés par injection.

8. Dispositif suivant l'une quelconque des revendications précédentes, caractérisé en ce que les pièces (19, 21; 119, 121) sont fabriquées dans des matières plastiques.

9. Dispositif suivant l'une quelconque des revendications 1 à 7, caractérisé en ce que les pièces (19, 21; 119, 121) sont fabriquées en un des métaux tels qu'aluminium ou magnésium.

10. Dispositif suivant l'une quelconque des revendications précédentes, caractérisé en ce qu'un matériau d'amortissement est situé entre des parties surélevées d'une partie et celles de l'autre partie.

11. Dispositif suivant la revendication 10, caractérisé en ce que le matériau d'amortissement est un adhésif.

12. Dispositif suivant la revendication 10, caractérisé en ce que le matériau d'amortissement est du caoutchouc.

13. Dispositif suivant l'une quelconque des revendications précédentes, caractérisé en ce que le système d'entraînement (11) pour le coulisseau (7) comprend une bobine d'entraînement plate (11a) fixée au corps de coulisseau (13) en forme de plaque et ayant un axe de bobine orienté transversalement par rapport au corps de coulisseau, le corps de coulisseau et la bobine d'entraînement étant coplanaires, et au moins un aimant permanent plat (33) destiné à coopérer avec la bobine d'entraînement, lequel aimant est disposé à l'opposé de la bobine d'entraînement et est fixé à une culasse (31) en un matériau magnétique doux, laquelle culasse est au moins partiellement en forme de plaque et est orientée transversalement par rapport à l'axe de la bobine.

14. Dispositif suivant la revendication 13, caractérisé en ce que la culasse en forme de plaque (31) est fixée au cadre (1) par des moyens élastiques et d'amortissement (37) capable de fléchir élastiquement et d'amortir dans une direction au moins sensiblement radiale par rapport à l'axe de rotation (3a) du plateau tournant (3).

15. Dispositif suivant la revendication 14, caractérisé en ce que lesdits moyens d'amortissement comprennent au moins un élément élastique et au moins un élément d'amortissement.

16. Lecteur de disques comprenant un boîtier (2) et un dispositif suivant l'une quelconque des revendications 1 à 15.
